# EUROPEAN PATENT SPECIFICATION

(11) **EP 3 415 385 B1**
(45) Date of publication and mention of the grant of the patent: **15.06.2022**
(21) Application number: 17176175.2
(22) Date of filing: 15.06.2017
(51) Int. Cl.: B60T 13/22, B60T 15/04

(54) **BRAKE SYSTEM, MINE VEHICLE AND METHOD OF RELEASING BRAKES**
BREMSSYSTEM, MINENFAHRZEUG UND VERFAHREN ZUM LÖSEN DER BREMSEN
SYSTÈME DE FREIN, VÉHICULE MINIER ET PROCÉDÉ DE DESSERRAGE DES FREINS

(43) Date of publication of application: 19.12.2018
(73) Proprietor: Sandvik Mining and Construction Oy, 33330 Tampere (FI)
(72) Inventor: SUOMI, Jussi, 33330 Tampere (FI)
(74) Representative: Sandvik

(56) References cited:
- WO-A1-99/37518
- US-A- 5 238 298

## Description

### Background of the invention

The invention relates to a brake system of a mine vehicle. The brake system comprises brake assemblies arranged in connection with wheels of the mine vehicle. The brake assemblies are spring applied brakes, which are released by means of hydraulic release actuators. Operation of such spring-applied hydraulically-released brake system and its release actuators is controlled by a main brake circuit during normal operational situations. The brake system also comprises a release circuit for actuating the release actuators in special circumstances.

A brake system of this kind is known from US 5238298 A. A similar brake system is known from WO 99/37518 A.

The invention further relates to a mine vehicle equipped with a spring-applied hydraulically-released brake system and to a method of controlling such brake system.

The field of the invention is defined more specifically in the preambles of the independent claims.

In mines and at other work sites different type of wheeled mine vehicles are used. The mine vehicles are provided with one or more mine working devices for executing mine work task at the work site. The mine vehicle may be a wheel loader, a transport vehicle or dumper, a rock drilling rig, a bolting or reinforcing vehicle or a measuring vehicle. The mine vehicles are heavy weight vehicles which are typically provided with spring-applied brakes for safety reasons. Such spring-applied hydraulically-released brake systems (SAHR) are used in mine vehicles to provide automatic fail-safe braking on loss of vehicle power or hydraulic fluid pressure. However, when a mine vehicle equipped with such brakes becomes disabled at the work site and the mine vehicle needs to be towed away, then the brakes have to be pressurized by means of an external pressure source for releasing the brakes. Different release systems are developed for pressurizing the brake systems and for controlling them. However, the present systems have shown to contain some disadvantages.

### Brief description of the invention

An object of the invention is to provide a novel and improved brake system and method for controlling spring activated and hydraulically releasable brake assemblies. The invention further relates to a mine vehicle implementing the improved brake system.

The brake system according to the invention is characterized by the characterizing features of a first independent apparatus claim.

The method according to the invention is characterized by the charactering features and steps of an independent method claim.

Further, characterizing features of the mine vehicle are disclosed in an additional independent apparatus claim.

An idea of the disclosed solution is that the brake system of a mine vehicle comprises a system allowing use of normal brakes of the vehicle even in situations wherein the brakes are released by a release circuit. Thereby the brake system may comprises one or more override devices for reapplying the brakes despite of the activated release circuit. The brake system comprises several spring applied hydraulically released brake assemblies, connected to a main brake system. The brake system further comprises a hydraulic release circuit for pressurizing release actuators of the brake assemblies independently relative to the main brake circuit in certain situations. The system for reapplying the brakes despite of the activated release circuit comprises one or more override devices, which are selectively operable for depressurizing the hydraulic release circuit. When the override device is activated, pressure in the hydraulic release circuit drops and the spring activated brakes become operable thus causing braking of the mine vehicle. In other words, the operation of the release circuit may be cancelled by controlling the operation of the override device or system. The operation of the override system is inverse to the operation of the release system.

An advantage of the disclosed solution is that safety of the mine vehicle is improved since the brakes are usable also in situations when the brakes are released by means of the release circuit.

According to an embodiment, the mentioned override device is controlled manually. Then an operator or service personnel decides when the override functionality is needed and generates control force or signal for initiating operation of the override device. The manual muscular control force may cause direct actuation of the override device. Alternatively, the actuation is indirect, whereby the manual control action generates signals which are transmitted to electrical or fluid operated actuators which then execute the actual change of control state of the override device.

According to an embodiment, the override device comprises at least one override valve connected to the release circuit. The override valve may comprise a first control position for coupling the release circuit and a second control position for decoupling the release circuit. The first control position is a normal position allowing the release circuit to pressurize the brakes for releasing them. However, when the override valve is switched from the normal first control position to the second control position, the release circuit is depressurized. When pressure no longer prevails in the release actuators of the brake assemblies the springs activate the brakes causing thereby braking of the mine vehicle. In other words, the second control position of the valve is a braking position and the normal first control position is a release position. The override valve may be a standard hydraulic component, such as a normal directional valve, whereby it is a relatively simple, reliable and inexpensive component.

According to an embodiment, the override device comprises at least one override valve or corresponding fluid control apparatus connected to the release circuit and being configured to close connection to a dedicated pressure source of the release circuit when being actuated. The valve is also configured to discharge remaining pressure of the release circuit to a tank or discharge line when being actuated from a normal first position to a second control position. A movable control member of the override valve or fluid control apparatus may be arranged to move linearly between the control positions, or alternatively, the control member may be turned between the control positions. The linearly movable control member may be a spool configured to open and close control openings, and the turning control member may be a control sleeve provided with through openings.

According to an embodiment, the override device comprises at least one override valve or corresponding fluid control apparatus. The override valve is controlled by a spring element to move towards a normal first control position when no external force is controlling the override valve. This way the override valve is moved automatically towards the release position and only the braking position requires separate control measures. An advantage of the spring loaded valve is that the release system is continuously usable when no special braking control command is generated. The valve is not accidently left to the braking position thereby preventing operation of the release system and towing of the mine vehicle.

According to an embodiment, the override device comprises at least one override valve or corresponding fluid control apparatus, which is a mechanically operated fluid control device. The mechanical operation means that it is actuated by muscular force and movement to change its control position. The override valve may be influenced by means of a manual control element such as a control lever, pedal or button. In other words, the operator of the mining vehicle actuates the control valve directly. Moving the valve manually is simple to arrange and the manual actuation principle is reliable. Furthermore, the operation of the manual override device may easily be arranged to be intuitive, which also has positive impact to security.

According to an embodiment, the override device comprises at least one override valve or corresponding fluid control member, which is an electrically operated control element. The override system may comprise an electrical switch for controlling the override valve. The switch may be a separate element located at an operator panel, or alternatively the switch may be located in connection with a brake pedal or parking brake lever, for example. The electrical control valve may comprise a solenoid for switching the control positions of the valve. A further alternative for actuating the control valve or the corresponding fluid control member is to use a pressure controlled valve, whereby the operator may generate control pressure by manual control movement and the control pressure moves the control valve to change the control positions of the override valve. An advantage of the valve having indirect electric or hydraulic control is that location of the valve may be selected freely.

According to an embodiment, the override device is located in connection with a normal brake pedal of the mine vehicle. The brake pedal is part of the main brake circuit and is configured to transmit manual control movement to a brake controller of the main brake circuit and to thereby control braking during normal drive. Thus, the brake pedal is configured to actuate not only the brake controller but also the override device. Since the override device is connected to the release circuit, actuation of the override device has effect on the brake assemblies only when the release circuit is pressurized and activated. The override device may be an override valve or corresponding fluid control apparatus by means of which pressure of the release circuit may be depressurized. Alternatively, an electric or hydraulic switch may be arranged in connection with the brake pedal and the generated control signal or pressure may be used to control separate hydraulic control member for depressurizing the release circuit. When the override device is controlled by the normal brake pedal, the operation of the override system is intuitive and no separate additional control members are needed in a control cabin of the mine vehicle.

According to an embodiment, the brake system comprises the brake pedal and the override valve as disclosed in the previous embodiment. The override valve and the brake controller are affected simultaneously by the movement of the brake pedal. However, the override valve executes idle movement when the release circuit is not activated since the release circuit is then not pressurized and no fluid control is possible. In other words, the movements of the override valve are relevant only in special situations, such as during towing, when the release system is actuated. An advantage of this solution is that the override system is continuously operable and no preparations and extra measures are required by the operator.

According to an embodiment, the brake system comprises a brake pedal unit comprising a frame, a brake pedal, a brake controller and an override valve. The brake pedal unit is mountable and dismountable in one piece facilitating thereby assembly and service of the mine vehicle.

According to an embodiment, the brake system comprises a brake pedal unit disclosed in the previous embodiment. Further, the brake pedal is connected to the frame by means of a turning joint allowing the brake pedal to swing relative to the frame. The brake controller and the override valve may be located at opposite sides of the turning joint, whereby the swing movement of the brake pedal in one direction is configured to move the brake controller and the override valve in opposite directions. Thanks to the disclosed swing arrangement positioning of the brake controller and the override valve on the unit is facilitated and the layout of the brake pedal unit may be compact.

In an alternative solution to the previous embodiment the brake controller and the override valve or the override device may be arranged on the same side of the turning joint.

According to an embodiment, the brake system comprises a duplicate hydraulic system. The main brake circuit and the release circuit are separate hydraulic systems comprising dedicated fluid channels, control members and pressure sources. An advantage of the duplicate system is that failures in the main brake system do not prevent operation of the release system.

According to an embodiment, the release circuit is separated from the main brake circuit by means of at least one pressure controlled separation valve. The separation valve is configured to open fluid connection from the release circuit to the brake assemblies when the pressure of the release circuit exceeds a preset pressure limit. The separation valve has a first normal position wherein fluid connection is connected from the main brake circuit to the release actuators, and a second position for closing the connection to the main brake circuit and opening connection from the release circuit to the release actuators. The separation valve may be kept in the normal first position by means of spring force when pressure in the main brake circuit is lost. Then the release circuit may be pressurized and the separation valve may change its position under pressure control and connect the release system. Opening pressure of the separation valve may be set by dimensioning force of a spring. The opening pressure may be 10 bar, for example.

According to an embodiment, the brake system comprises two separation valves disclosed in the previous embodiment. A front separation valve is for separating the main brake circuit at several front brake assemblies from the release circuit, and a rear separation valve is for separating the main brake circuit from the release circuit at several rear brake assemblies.

According to an embodiment, the mine vehicle is an underground mine vehicle. The disadvantage of such heavy weight mine vehicles equipped with spring-applied brakes is that such brakes prevent a disabled vehicle from easily being towed. This is a particular problem with vehicles used in underground mines where access to the disabled vehicle is limited. This is particularly critical where the mine vehicles are used under unreinforced mine ceilings. Because workers are not permitted in such areas, repair and retrieval of a disabled vehicle may be impossible.

According to an embodiment, the mine vehicle is a wheel loader designed for underground mines and comprising a bucket for hauling and loading broken rock material and ore at the mine site. Thus, the mine work device of the mine vehicle is the bucket.

According to an embodiment, the mine vehicle is a wheeled dumper or haul truck designed for underground mines and comprising a dump box for hauling broken rock material and ore at the mine site. Thus, the mine work device of the mine vehicle is the dump box.

According to an embodiment, the mine vehicle is a wheeled rock drilling rig designed for underground mines and comprising one or more booms provided with rock drilling machines. Thus, the mine work device of the mine vehicle is the drilling machine.

According to an embodiment, the mine vehicle comprises at least one tow element allowing towing of the mine vehicle when being disabled. Typically the tow element is located at a rear end of the mine vehicle i.e. at an opposite end of the vehicle relative to the mine work device. The tow element is arranged movably relative to the carrier and comprises an idle normal position and an activated towing position. Further, the movable tow element is connected to a hydraulic pump configured to generate hydraulic pressure for the release circuit when the tow element is moved from the idle normal position to the activated towing position. In other words, the pressure required for releasing the springs of the brake assemblies is generated automatically and without any external or separate devices when the towing is started. The hydraulic pump actuated by the tow element may be a hydraulic cylinder serving as the second pressure source of the release circuit. The hydraulic cylinder may be an integrated part of the tow element. Alternatively, the movement of the tow element may be transformed from linear movement to rotation whereby the pump may be a rotating pump.

According to an embodiment, the apparatus includes a tow hook attached to the vehicle and operably connected to a hydraulic cylinder so that a towing force on the tow hook actuates the hydraulic cylinder. The hydraulic cylinder is connected to transmit a hydraulic pressure to the vehicle brakes for releasing the brakes and to permit towing. A spring returns the tow hook to its original position when the towing force is removed, thereby permitting the spring-activated brakes to be reapplied. The override device disclosed above is configured to depressurize the brakes during the towing.

According to an embodiment, the release circuit is provided with a dedicated hydraulic pump serving as the second pressure source and to thereby pressurize the release circuit. The dedicated pressure pump is operable independently relative to the main hydraulic pump and the tow element. The dedicated hydraulic pump may be manually operable, or alternatively the pump may be powered by means of a dedicated electric power unit comprising an electric motor and energy storage.

According to an embodiment, the release circuit is provided with a dedicated hydraulic accumulator serving as the second pressure source and to thereby pressurize the release circuit.

According to an embodiment, the release circuit may comprise two or more pressurization systems disclosed in the embodiments above.

According to an embodiment, the main brake circuit is pressurized by means of a main hydraulic pump of the mine vehicle.

According to an embodiment, the release circuit or the brake assemblies may be provided with remotely controlled valves for depressurizing the release actuators. The remotely controlled valve may an electrical valve configured to direct prevailing pressure of the release actuator to a tank line and to close feeding of pressure fluid from the release circuit to the release actuator. The remotely controlled electric valve may be controlled under control signals transmitted from a control cabin of the mine vehicle or the signals may be generated by means of a portable control unit. The remotely controlled valve may be located in connection with the brake assemblies or in the release circuit.

The above disclosed embodiments may be combined in order to form suitable solutions having those of the above features that are needed.

### Brief description of the figures

Some embodiments are described in more detail in the accompanying drawings, in which
Figure 1 is a schematic side view of a wheel loader,
Figure 2 is a schematic view of a brake system of a mine vehicle,
Figure 3 is a schematic view of a part of a brake system comprising an override device,
Figure 4 is a schematic view of a part of a brake system comprising an alternative override system for allowing braking despite of the activated release circuit,
Figure 5 is a schematic view of a part of a brake system wherein an override valve and a brake controller are both actuated by means of a brake pedal,
Figure 6 is a schematic view of a part of a brake system wherein a brake controller and an override valve have dedicated manual actuation elements,
Figure 7 is a schematic diagram showing some alternative pressure sources for generating needed release pressure for a release circuit of a brake system, and
Figure 8 is a schematic view of brake pedal unit.

For the sake of clarity, the figures show some embodiments of the disclosed solution in a simplified manner. In the figures, like reference numerals identify like elements.

### Detailed description of some embodiments

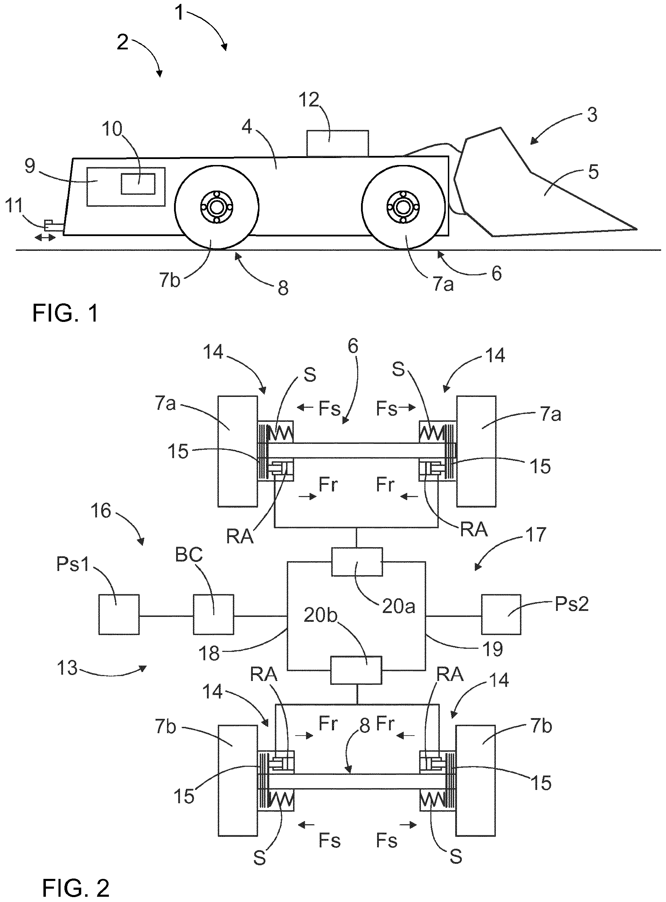

Figure 1 shows a wheel loader 1 as an example of a mine vehicle 2. Also hauling trucks and rock drilling rigs are mine vehicles 2 comprising at least one mine work device 3. The disclosed method and solution may be applied in all type mine vehicles and especially for those intended for underground mines.

The wheel loader 1 shown in Figure 1 comprises a carrier 4 and a bucket 5 connected movably to the carrier 4. The carrier 4 comprises a front axle 6 provided with front wheels 7a and a rear axle 8 provided rear wheels 7b. The wheels 7 are provided with spring activated and hydraulically released brakes (SAHR -brakes), which are connected to a hydraulic brake circuit. The carrier also comprises a main power unit 9 in connection of which may be a main hydraulic pump 10 for generating hydraulic pressure for a hydraulic system of the wheel loader 1. During normal operation of the wheel loader the hydraulic pressure generated by the main hydraulic pump 10 may be conveyed to the brake system too. Figure 1 further discloses that a rear end of the carrier 4 may be provided with a towing element 11, such as towing hook, for towing the wheel loader when it has become disabled. The towing element 11 may be connected movably to the carrier 4. At a front end portion of the carrier 4 is a control cabin 12 provided with brake and other control means.

In Figure 2 a brake system 13 of the wheel loader 1 of Figure 1 is shown. In connection with the front wheels 7a and the rear wheels 7b are brake assemblies 14 each of which comprise at least one spring S for connecting brakes 15 and at least one release actuator RA for disconnecting the brakes 15. The brakes 15 may comprise disc-like braking elements for generating braking forces, or alternatively, the brakes may comprise brake shoes, for example. The brake assemblies 14 are connected to a hydraulic main brake circuit 16, which comprises at least one first pressure source Ps1 and at least one brake controller BC. The first pressure source Ps1 may comprise a connection to a main hydraulic system of the wheel loader, or it may comprise a dedicated hydraulic pump. The brake controller BC may be located in the control cabin whereby an operator may control operation of the release actuators RA. Further, the brake system 13 comprises a hydraulic release circuit 17 provided with a second pressure source Ps2. The second pressure source Ps2 may be operated independently relative to the first pressure source Ps1, whereby the release actuators RA may be pressurized also in situations when the main brake system is failed. Both brake circuits 16, 17 comprise dedicated pressure channels 18, 19, which are separated from each other at the front and rear axles 6, 8 by means of separating valves 20a, 20b or corresponding control elements. The separating valves 20a, 20b may control feeding of pressure fluid selectively to the brake assemblies 14.

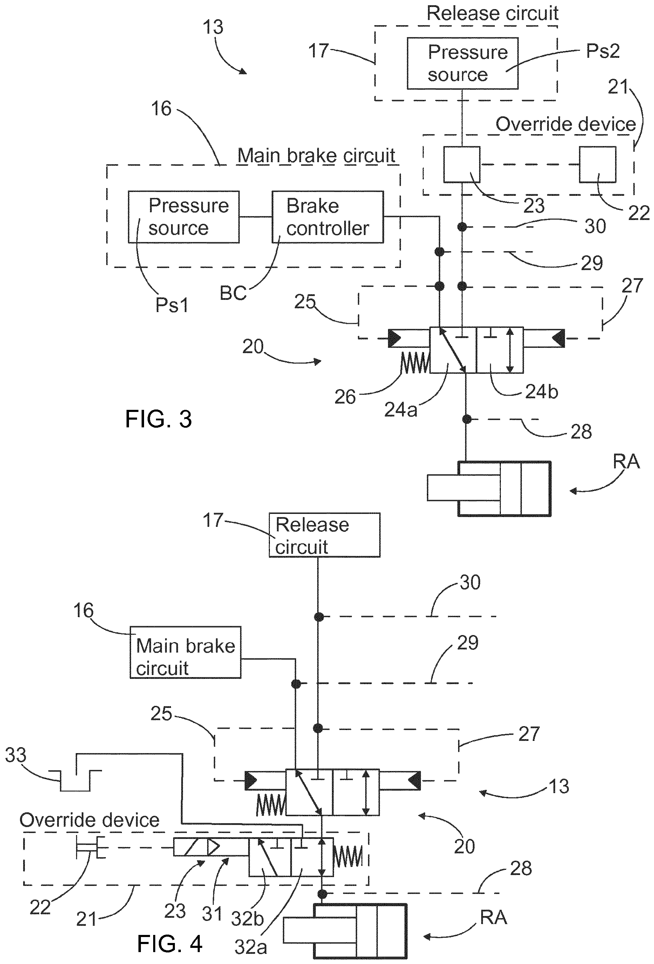

Figure 3 discloses a brake system 13, which is provided with an override device 21 configured to depressurize the release circuit 17 in response to control measures. The override device 21 may comprise a control element 22 for generating manual control movements or signals for controlling operation of a control member 23, which is arranged in fluid connection with the release circuit 17. The control element 22 may be a push button or a control lever arranged to affect operation of the control member 23, which may be a valve, for example. The control member 23 may close connection to the second pressure source Ps2 and may connect the release circuit 17 to a discharge line, whereby the release circuit may be depressurized in response to control measures executed by the control element 22.

In normal situation a pressure controlled separating valve 20 is in a first control position 24a since a first pressure control line 25 is pressurized by means of pressure of the main brake circuit 16. The separating valve 20 is also pushed towards the first control position 24a by means of a spring 26. When the main brake circuit 16 is disabled and the release circuit 17 is pressurized, a second pressure control line 27 of the separating valve 20 is pressurized and the valve 20 moves against force of the spring 26 towards a second control position 24b. The spring force may be adjusted so that the change of the control positions occurs only in response to exceed of a predetermined pressure limit, which may be 10 bars, for example. The release actuator RA may be a hydraulic cylinder, or alternatively, it may be a hydraulic motor connected to a gear device for transforming generated turning movement into linear movement.

In the first control position 24a the main brake circuit 16 is connected to the release actuators RA and the release circuit 17 is disconnected. In the second control position 24b the main brake circuit 16 is disconnected and the release circuit 17 is connected. However, operation of the connected release circuit 17 may be cancelled by means of the override device 21.

In Figure 3 only one release actuator RA is shown for the shake of clarity. However, the separating valve 20 may control pressure fluid to one or more release actuators on the same axle through a pressure channel 28. Further, the main brake circuit 16 may be connected to one or more other separating valves by means of a pressure channel 29, and the release circuit 17 may have a corresponding connection to them through a pressure channel 30. Operation principle of the brake system 13 is the same despite of number of the axles of the mine vehicle and number of the controlled brake assemblies. Thus, Figures 4 - 6 are simplified in the same manner for improving clarity.

The brake system disclosed in Figure 4 is substantially the same as in Figure 3, except the override device 21, which is in Figure 4 arranged to a pressure line connecting the separating valve 20 and the release actuator RA. Then, the override device 21 may comprise an electrically controlled override valve 31 serving as a control member 23. The control valve 31 may be controlled remotely by means of a manual control element 22, such as a control button, which may be located in the control cabin. The override valve 31 is in Figure 4 in a first control position 32a wherein connection between the separating valve 20 and the release actuator RA is connected. When the control element 22 is actuated, the valve switches to a second control position 32b, wherein connection to the separating valve 20 is closed and connection to a tank 33 is opened. Thus, the release actuator RA is depressurized and the brakes are actuated. Similar override device 21 may be arranged to other axles and wheels of the mine vehicle.

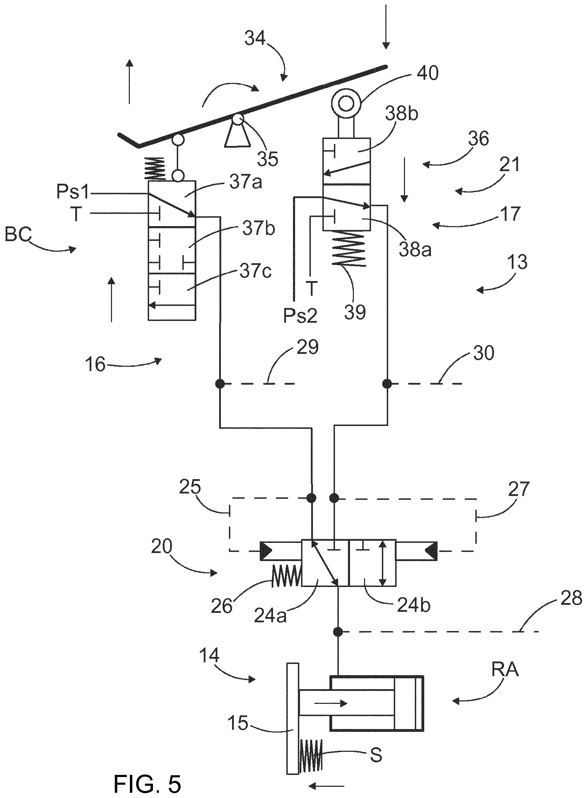

Figure 5 discloses an alternative system for controlling the brake controller BC and the override device 21 by utilizing a normal brake pedal 34. The brake controller BC and an override valve 36 of the override device 21 may be located on opposite sides of a turning joint 35. Thereby the brake controller BC and the override valve 36 are moved in opposite directions when the brake pedal 34 is pressed. The brake controller BC may be a directional valve having three control positions 37a - 37b. In a first control position 37a the main brake circuit 16 is pressurized since connection to the first pressure source Ps1 is open. In a second control position 37c the main brake circuit 16 is connected to a tank line T and the brakes are actuated. In a third control position 37b all connections are closed. Actuation of the brake pedal 34 lifts the control valve of the brake controller BC upwards and the brake pedal 34 and the brake controller BC may be returned to the normal lower position by means of a spring element. The override valve 36 may also be a directional valve and it comprises a normal first control position 38a wherein the release circuit 17 is connected to the second pressure source Ps2 and connection to the tank line T is closed. The override valve is kept in the normal first control position 38a by means of a spring 39, for example. When the brake pedal is pressed, then a roller element 40 or corresponding force transmitting element or plunger transmits mechanical movement of the brake pedal 34 to the override valve 36 and moves it in down ward direction. Then a second control position 38b is actuated and the release circuit 17 is connected to a tank line T and connection to the second pressure source Ps2 is closed. The structure and operation of the separating valves 20 and the brake assemblies 14 may be the same as disclosed in connection with the previous Figures.

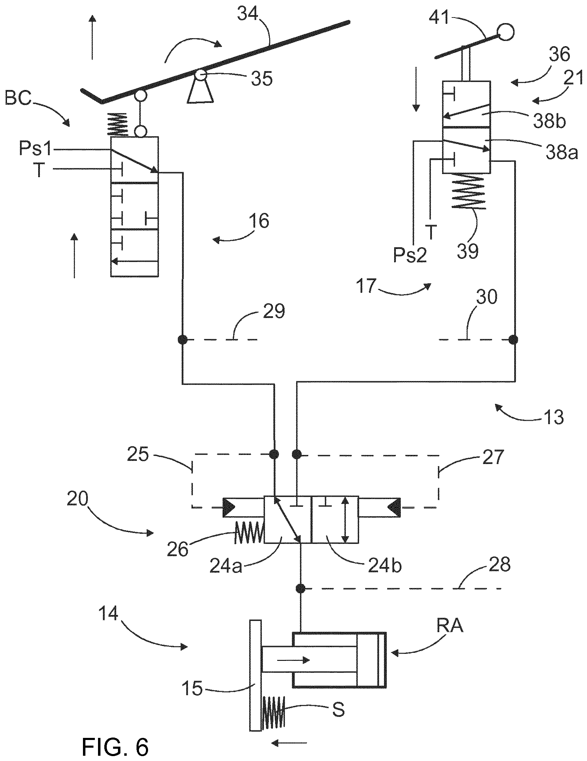

Figure 6 discloses a solution that differs from the solution of Figure 5 in that the override valve 36 is not actuated by the brake pedal but instead it may be actuated by a control lever 41. The control lever 41 may be located in the control cabin or elsewhere.

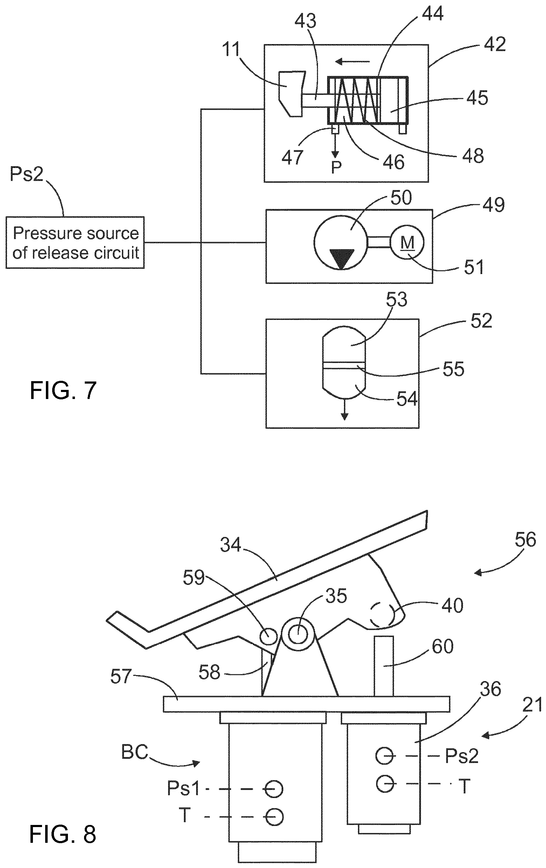

Figure 7 discloses some feasible second pressure sources Ps2 for pressurizing the release circuit. The needed pressure may be generated by means of a pressure pump unit 42 arranged in connection with the towing element 11. Then the towing element 11, such as towing hook, is arranged to move a piston rod 43 of a cylinder 44, whereby a piston 45 moves inside the cylinder 44 and generates pressure in a pressure space 46. The generated pressure may be conveyed through a pressure port 47 to the release circuit. When towing force is removed a spring 48 may return the towing element 11 and the piston 45 to their initial normal positions. Thus, the cylinder 44 acts as a pumping device when the towing element 11 is pulled for initiating the towing. Alternatively, the release circuit may comprise a dedicated hydraulic power pack 49 comprising a hydraulic pump 50 and a power device 51 for actuating the pump 50. The power device may be an electrical motor M and the power pack 49 may comprise an energy storage for driving the motor. Alternatively, the power device may be a manually operable lever or corresponding element. A further alternative is to use a pressure storage or pressure accumulator 52 for pressurizing the release circuit. The pressure accumulator 52 comprises a gas space 53, a hydraulic fluid space 54 and a separating element 55, such as a piston or membrane, between the spaces 53, 54. Hydraulic fluid may be stored inside the space 54 and the gas space 53 may be pre-charged with pressurized gas. Operational condition of the accumulator 52 may be monitored in order to ensure that the accumulator is continuously operable to provide the needed pressure for the release circuit.

Figure 8 discloses a brake pedal unit 56 comprising a frame 57, a brake pedal 34, a turning joint 35, a brake controller BC and an override device 21. The frame 56 may comprise fastening means for mounting the brake pedal unit 56 in one single piece to a mine vehicle. The brake controller BC may be a directional valve which is connected by means of a lifting lever 58 and a joint 59 to the brake pedal 34. The override device 21 comprises an override valve 36 fastened to the frame 57 and comprising a plunger 60 facing towards the brake pedal 34. The brake pedal 34 may comprise a rotating roller 40 configured to push the plunger 60 when the brake pedal 34 is actuated.

In an alternative brake pedal unit may the brake controller and the override valve may be arranged on the same side relative to the turning joint, or their location may be opposite to that shown in Figures 5 and 8.

The drawings and the related description are only intended to illustrate the idea of the invention. In its details, the invention may vary within the scope of the claims.

## Claims

1. A brake system (13) for a mine vehicle (2) comprising:
several spring applied hydraulically released brake assemblies (14), wherein the brake assemblies (14) comprise springs (S) for applying the brakes (15) and hydraulically operable release actuators (RA) for releasing the brakes (15) ;
a hydraulic main brake circuit (16) connected to a first pressure source (Ps1) and to the release actuators (RA) and comprising at least one brake controller (BC) comprising a first control position (37a) to pressurize the release actuators (RA) for releasing the brakes (15), and a second control position (37c) to depressurize the release actuators (RA) for applying the brakes (15); and
a hydraulic release circuit (17) comprising at least one second pressure source (Ps2) for pressurizing the release actuators (RA), and thereby activating the release circuit (17), independently relative to the main brake circuit (16);
**characterized in that**
the brake system (13) further comprises at least one override device (21), which is selectively operable for depressurizing the release circuit (17) for applying the brakes (15), whereby the brakes (15) are operable by means of the override device (21) despite the activation of the release circuit (17).

2. The brake system as claimed in claim 1, **characterized in that**
the override device (21) comprises at least one override valve (36) connected to the release circuit (17);
and
the override valve (36) is switchable from a first control position (38a) to a second control position (38b) for depressurizing the release circuit (17) and to thereby activate the brakes (15).

3. The brake system as claimed in claim 2, **characterized in that**
the brake system (13) comprises a brake pedal (34) for controlling operation of the brake controller (BC) of the main brake circuit (16); and
the override valve (36) is located so as to be also actuated by the brake pedal (34).

4. The brake system as claimed in claim 3, **characterized in that**
the brake system (13) comprises a brake pedal unit (56) comprising a frame (57), the brake pedal (34), the brake controller (BC) and the override valve (36);
the brake pedal (34) is connected to the frame (57) by means of a turning joint (35) allowing the brake pedal (34) to pivot relative to the frame (57); and
the brake controller (BC) and the override valve (36) are located at opposite sides of the turning joint (35), whereby the pivoting movement of the brake pedal (34) in one direction is configured to move the brake controller (BC) and the override valve (36) in opposite directions.

5. The brake system as claimed in any one of the preceding claims 1 to 4, **characterized in that**
the release circuit (17) is separated from the main brake circuit (16) by means of at least one pressure controlled separation valve (20); and
the separation valve (20) is configured to open fluid connection from the release circuit (17) to the brake assemblies (14) when the pressure of the release circuit (17) exceeds a preset pressure limit.

6. A mine vehicle (2) comprising:
a carrier (4) provided with several wheels (7);
at least one mine work device (3) arranged on the carrier (4) for executing mine work tasks;
a brake system (13) comprising several spring applied and hydraulically released brake assemblies (14) at the wheels (7) and wherein the brake assemblies (14) are provided with hydraulic release actuators (RA), and the brake system (13) further comprises a hydraulic main brake circuit (16) and a separate hydraulic release circuit (17) for actuating the release actuators (RA);
and wherein the main brake circuit (16) comprises a first pressure source (Ps1) and a brake controller (BC) for directing hydraulic pressure to the release actuators (RA) for releasing the brakes (15) during normal use of the mine vehicle (2);
an wherein the release circuit (17) comprises a second pressure source (Ps2) and at least one control element for directing hydraulic pressure independently to the release actuators (RA) when the main brake circuit (16) is depressurized; and
at least one tow element (11) allowing towing of the mine vehicle (2) when being disabled;
**characterized in that**
the brake system (13) is in accordance with the previous claims 1 to 5 and comprises the disclosed override device (21) for depressurizing the release circuit (15) to allow breaking during towing.

7. The mine vehicle as claimed in claim 6, **characterized in that**
the tow element (11) is arranged movably relative to the carrier (4) and comprises an idle normal position and an activated towing position; and
the movable tow element (11) is connected to a hydraulic pump (42) configured to generate hydraulic pressure for the release circuit (17) when the tow element (11) is moved from the idle normal position to the activated towing position.

8. The mine vehicle as claimed in claim 6 or 7, **characterized in that**
the control element of the release circuit (17) is a pressure controlled separation valve (20) configured to separate the main brake circuit (16) and the release circuit (17) from each other when pressure of the release circuit (17) is under a preset pressure limit.

9. A method of controlling spring activated and hydraulically releasable brake assemblies (14) of a mine vehicle (2),
the method comprising:
generating hydraulic pressure to a main brake circuit (16) by means of a first hydraulic source (Ps1);
controlling feeding of the hydraulic pressure to release actuators (RA) of the brake assemblies (14) by means of a brake controller (BC) connected to the main brake circuit (16);
directing the hydraulic pressure fluid in the main brake circuit (16) to the release actuators (RA) for releasing the spring activated brakes (15);
directing the hydraulic pressure fluid in the main brake circuit (16) away from the release actuators (RA) for depressurizing the release actuators (RA) and applying the brakes (15) by means of the springs (S) of the brake assemblies (14); and
directing selectively hydraulic pressure fluid from a second pressure source (Ps2) via a separate release circuit (17) to the release actuators (RA), and thereby activating the release circuit (17), for releasing the brakes (15) independently when the main brake circuit (16) is depressurized;
**characterized by**
depressurizing the release circuit (17) selectively by means of an override device (21) connected to the release circuit (17) and activating the brakes (15) despite of the activated release circuit (17).

10. The method as claimed in claim 9, **characterized by**
disconnecting the release circuit (17) from the second pressure source (Ps2) and discharging the release circuit (17) selectively by means of an override valve (36) connected to the release circuit (17).

11. The method as claimed in claim 9 or 10, **characterized by**
activating the operation of the override device (21) by means of a brake pedal (34) arranged to control the brake controller (BC) of the main brake circuit (16).

12. The method as claimed in any one of the preceding claims 9 - 11, **characterized by**
providing control for the brake system (13) by means of the override device (21) only after the release circuit (17) has been pressurized.

13. The method as claimed in any one of the preceding claims 9 - 12, **characterized by**
pressurizing the release circuit (17) automatically in response to towing of the mine vehicle (2).

## Patentansprüche

1. Bremssystem (13) für ein Minenfahrzeug (2), umfassend:
mehrere federbetätigte hydraulisch gelöste Bremsanordnungen (14), wobei die Bremsanordnungen (14) Federn (S) zum Betätigen der Bremsen (15) und hydraulisch betreibbare Lösestellantriebe (RA) zum Lösen der Bremsen (15) umfassen;
einen hydraulischen Hauptbremskreis (16), der mit einer ersten Druckquelle (Ps1) und mit den Lösestellantrieben (RA) verbunden ist und mindestens eine Bremssteuerung (BC) umfasst, die eine erste Steuerungsposition (37a), um die Lösestellantriebe (RA) zum Lösen der Bremsen (15) unter Druck zu setzen, und eine zweite Steuerungsposition (37c) umfasst, um die Lösestellantriebe (RA) zum Betätigen der Bremsen (15) drucklos zu machen; und
einen hydraulischen Lösekreis (17), der mindestens eine zweite Druckquelle (Ps2) umfasst, um in Bezug auf den Hauptbremskreis (16) unabhängig die Lösestellantriebe (RA) unter Druck zu setzen, und dadurch den Lösekreis (17) zu aktivieren;
**dadurch gekennzeichnet, dass**
das Bremssystem (13) weiter mindestens eine Überbrückungsvorrichtung (21) umfasst, die selektiv betreibbar ist, um den Lösekreis (17) drucklos zu machen, um die Bremsen zu betätigen (15), wodurch die Bremsen (15) anhand der Überbrückungsvorrichtung (21) ungeachtet der Aktivierung des Lösekreises (17) betreibbar sind.

2. Bremssystem nach Anspruch 1, **dadurch gekennzeichnet, dass**
die Überbrückungsvorrichtung (21) mindestens ein Überbrückungsventil (36) umfasst, das mit dem Lösekreis (17) verbunden ist;
und
das Überbrückungsventil (36) von einer ersten Steuerungsposition (38a) in eine zweite Steuerungsposition (38b) umschaltbar ist, um den Lösekreis (17) drucklos zu machen, und dadurch die Bremsen (15) zu aktivieren.

3. Bremssystem nach Anspruch 2, **dadurch gekennzeichnet, dass**
das Bremssystem (13) ein Bremspedal (34) zum Steuern des Betriebs der Bremssteuerung (BC) des Hauptbremskreises (16) umfasst; und
das Überbrückungsventil (36) so gelegen ist, um auch vom Bremspedal (34) betätigt zu werden.

4. Bremssystem nach Anspruch 3, **dadurch gekennzeichnet, dass**
das Bremssystem (13) eine Bremspedaleinheit (56) umfasst, die einen Rahmen (57), das Bremspedal (34), die Bremssteuerung (BC) und das Überbrückungsventil (36) umfasst;
das Bremspedal (34) anhand einer Drehkupplung (35) mit dem Rahmen (57) verbunden ist, die es dem Bremspedal (34) erlaubt, sich in Bezug zum Rahmen (57) zu drehen; und
die Bremssteuerung (BC) und das Überbrückungsventil (36) an gegenüberliegenden Seiten der Drehkupplung (35) gelegen sind, wodurch die Drehbewegung des Bremspedals (34) in einer Richtung konfiguriert ist, um die Bremssteuerung (BC) und das Überbrückungsventil (36) in entgegengesetzte Richtungen zu bewegen.

5. Bremssystem nach einem der vorstehenden Ansprüche 1 bis 4, **dadurch gekennzeichnet, dass**
der Lösekreis (17) anhand von mindestens einem druckgesteuerten Trennventil (20) von dem Hauptbremskreis (16) getrennt ist; und
das Trennventil (20) konfiguriert ist, um eine Fluidverbindung von dem Lösekreis (17) zu den Bremsanordnungen (14) zu öffnen, wenn der Druck des Lösekreises (17) eine voreingestellte Druckgrenze überschreitet.

6. Minenfahrzeug (2), umfassend:
einen Träger (4), der mit mehreren Rädern (7) bereitgestellt ist;
mindestens eine Minenarbeitsvorrichtung (3), die an dem Träger (4) zum Ausführen von Minenarbeitsaufgaben angeordnet ist;
ein Bremssystem (13), das mehrere federbetätigte hydraulisch gelöste Bremsanordnungen (14) an den Rädern (7) umfasst, und wobei die Bremsanordnungen (14) mit hydraulischen Lösestellantrieben (RA) bereitgestellt sind, und das Bremssystem (13) weiter einen hydraulischen Hauptbremskreis (16) und einen getrennten hydraulischen Lösekreis (17) zum Betätigen der Lösestellantriebe (RA) umfasst;
und wobei der Hauptbremskreis (16) eine erste Druckquelle (Ps1) und eine Bremssteuerung (BC) zum Leiten von Hydraulikdruck zu den Lösestellantrieben (RA) zum Lösen der Bremsen (15) im Normalbetrieb des Minenfahrzeugs (2) umfasst;
und wobei der Lösekreis (17) eine zweite Druckquelle (Ps2) und mindestens ein Steuerungselement zum Leiten von Hydraulikdruck unabhängig zu den Lösestellantrieben (RA) umfasst, wenn der Hauptbremskreis (16) drucklos gemacht ist; und
mindestens ein Schleppelement (11), welches das Schleppen des Minenfahrzeugs (2) erlaubt, wenn es deaktiviert ist;
**dadurch gekennzeichnet, dass**
das Bremssystem (13) entsprechend den vorstehenden Ansprüchen 1 bis 5 ist, und die offenbarte Überbrückungsvorrichtung (21), um den Lösekreis (15) drucklos zu machen, umfasst, um das Bremsen beim Schleppen zu erlauben.

7. Minenfahrzeug nach Anspruch 6, **dadurch gekennzeichnet, dass**
das Schleppelement (11) in Bezug auf den Träger (4) beweglich angeordnet ist, und eine normale Ruheposition und eine aktivierte Schleppposition umfasst; und
das bewegliche Schleppelement (11) mit einer Hydraulikpumpe (42) verbunden ist, die konfiguriert ist, um Hydraulikdruck für den Lösekreis (17) zu erzeugen, wenn das Schleppelement (11) von der normalen Ruheposition in die aktivierte Schleppposition bewegt wird.

8. Minenfahrzeug nach Anspruch 6 oder 7, **dadurch gekennzeichnet, dass**
das Steuerungselement des Lösekreises (17) ein druckgesteuertes Trennventil (20) ist, das konfiguriert ist, um den Hauptbremskreis (16) und den Lösekreis (17) voneinander zu trennen, wenn Druck des Lösekreises (17) unter einer voreingestellten Druckgrenze liegt.

9. Verfahren zum Steuern von federbetätigten und hydraulisch gelösten Bremsanordnungen (14) eines Minenfahrzeugs (2),
wobei das Verfahren umfasst:
Erzeugen von Hydraulikdruck in einem Hauptbremskreis (16) anhand einer ersten Hydraulikquelle (Ps1);
Steuern der Zuführung des Hydraulikdrucks zu Lösestellantrieben (RA) der Bremsanordnungen (14) anhand einer Bremssteuerung (BC), die mit dem Hauptbremskreis (16) verbunden ist;
Leiten des Hydraulikdruckfluids in dem Hauptbremskreis (16) zu den Lösestellantrieben (RA) zum Lösen der federbetätigten Bremsen (15);
Leiten des Hydraulikdruckfluids in dem Hauptbremskreis (16) von den Lösestellantrieben (RA) weg, um die Lösestellantriebe (RA) drucklos zu machen, und die Bremsen (15) anhand der Federn (S) der Bremsanordnungen (14) zu betätigen; und
selektiv Leiten des Hydraulikdruckfluids aus einer zweiten Druckquelle (Ps2) über einen getrennten Lösekreis (17) zu den Lösestellantrieben (RA), und dadurch Aktivieren des Lösekreises (17), um die Bremsen (15) unabhängig zu lösen, wenn der Hauptbremskreis (16) drucklos gemacht ist;
**gekennzeichnet durch**
selektiv drucklos Machen des Lösekreises (17) anhand einer Überbrückungsvorrichtung (21), die mit dem Lösekreis (17) verbunden ist, und Aktivieren der Bremsen (15) ungeachtet des aktivierten Lösekreises (17).

10. Verfahren nach Anspruch 9, **gekennzeichnet durch**
Trennen des Lösekreises (17) von der zweiten Druckquelle (Ps2) und selektiv Entlasten des Lösekreises (17) anhand eines Überbrückungsventils (36), das mit dem Lösekreis (17) verbunden ist.

11. Verfahren nach Anspruch 9 oder 10, **gekennzeichnet durch**
Aktivieren des Betriebs der Überbrückungsvorrichtung (21) anhand eines Bremspedals (34), das angeordnet ist, um die Bremssteuerung (BC) des Hauptbremskreises (16) zu steuern.

12. Verfahren nach einem der vorstehenden Ansprüche 9 -11, **gekennzeichnet durch**
Bereitstellen einer Steuerung für das Bremssystem (13) anhand der Überbrückungsvorrichtung (21) erst nachdem der Lösekreis (17) unter Druck gesetzt worden ist.

13. Verfahren nach einem der vorstehenden Ansprüche 9 - 12, **gekennzeichnet durch**
unter Druck setzen des Lösekreises (17) automatisch als Reaktion auf das Schleppen des Minenfahrzeugs (2).

## Revendications

1. Système de freinage (13) pour un véhicule minier (2) comprenant :
plusieurs ensembles de freinage relâchés hydrauliquement serrés par ressort (14), dans lequel les ensembles de freinage (14) comprennent des ressorts (S) pour serrer les freins (15) et des actionneurs de relâchement (RA) actionnables hydrauliquement pour relâcher les freins (15) ;
un circuit de freinage principal hydraulique (16) relié à une première source de pression (Ps1) et aux actionneurs de relâchement (RA) et comprenant au moins un dispositif de commande de freins (BC) comprenant une première position de commande (37a) pour pressuriser les actionneurs de relâchement (RA) pour relâcher les freins (15), et une seconde position de commande (37c) pour dépressuriser les actionneurs de relâchement (RA) pour serrer les freins (15) ; et
un circuit de relâchement hydraulique (17) comprenant au moins une seconde source de pression (Ps2) pour pressuriser les actionneurs de relâchement (RA), et activer par là-même le circuit de relâchement (17), indépendamment par rapport au circuit de freinage principal (16) ;
**caractérisé en ce que**
le système de freinage (13) comprend en outre au moins un dispositif de surpassement (21) qui est actionnable sélectivement pour dépressuriser le circuit de relâchement (17) pour serrer les freins (15), selon lequel les freins (15) sont actionnables au moyen du dispositif de surpassement (21) en dépit de l'activation du circuit de relâchement (17).

2. Système de freinage selon la revendication 1, **caractérisé en ce que**
le dispositif de surpassement (21) comprend au moins une soupape de surpassement (36) reliée au circuit de relâchement (17) ;
et
la soupape de surpassement (36) est commutable d'une première position de commande (38a) à une seconde position de commande (38b) pour dépressuriser le circuit de relâchement (17) et activer par là-même les freins (15).

3. Système de freinage selon la revendication 2, **caractérisé en ce que**
le système de freinage (13) comprend une pédale de frein (34) pour commander le fonctionnement du dispositif de commande de freins (BC) du circuit de freinage principal (16) ; et
la soupape de surpassement (36) est située de sorte à être aussi actionnée par la pédale de frein (34).

4. Système de freinage selon la revendication 3, **caractérisé en ce que**
le système de freinage (13) comprend une unité de pédale de frein (56) comprenant un cadre (57), la pédale de frein (34), le dispositif de commande de frein (BC) et la soupape de surpassement (36) ;
la pédale de frein (34) est reliée au cadre (57) au moyen d'un joint tournant (35) permettant à la pédale de frein (34) de pivoter par rapport au cadre (57) ; et
le dispositif de commande de frein (BC) et la soupape de surpassement (36) sont situés au niveau de côtés opposés du joint tournant (35), selon lequel le mouvement pivotant de la pédale de frein (34) dans une direction est configuré pour déplacer le dispositif de commande de frein (BC) et la soupape de surpassement (36) dans des directions opposées.

5. Système de freinage selon l'une quelconque des revendications précédentes 1 à 4, **caractérisé en ce que**
le circuit de relâchement (17) est séparé du circuit de freinage principal (16) au moyen d'au moins une soupape de séparation commandée par pression (20) ; et
la soupape de séparation (20) est configurée pour ouvrir la connexion fluidique du circuit de relâchement (17) aux ensembles de freinage (14) lorsque la pression du circuit de relâchement (17) excède une limite de pression prédéfinie.

6. Véhicule minier (2) comprenant :
un engin porteur (4) doté de plusieurs roues (7) ;
au moins un dispositif d'exploitation minière (3) agencé sur l'engin porteur (4) pour exécuter des tâches d'exploitation minière ;
un système de freinage (13) comprenant plusieurs ensembles de freinage serrés par ressort et relâchés hydrauliquement (14) au niveau des roues (7) et dans lequel les ensembles de freinage (14) sont dotés d'actionneurs de relâchement hydraulique (RA), et le système de freinage (13) comprend en outre un circuit de freinage principal hydraulique (16) et un circuit de relâchement hydraulique (17) séparé pour actionner les actionneurs de relâchement (RA) ;
et dans lequel le circuit de freinage principal (16) comprend une première source de pression (Ps1) et un dispositif de commande de frein (BC) pour diriger une pression hydraulique vers les actionneurs de relâchement (RA) pour relâcher les freins (15) pendant une utilisation normale du véhicule minier (2) ;
et dans lequel le circuit de relâchement (17) comprend une seconde source de pression (Ps2) et au moins un élément de commande pour diriger une pression hydraulique indépendamment vers les actionneurs de relâchement (RA) lorsque le circuit de freinage principal (16) est dépressurisé ; et
au moins un élément de remorquage (11) permettant le remorquage du véhicule minier (2) lorsqu'il est hors service ;
**caractérisé en ce que**
le système de freinage (13) est selon les revendications 1 à 5 et comprend le dispositif de surpassement (21) divulgué pour dépressuriser le circuit de relâchement (15) pour permettre le freinage pendant le remorquage.

7. Véhicule minier selon la revendication 6, **caractérisé en ce que**
l'élément de remorquage (11) est agencé de manière mobile par rapport à l'engin porteur (4) et comprend une position normale de repos et une position de remorquage activée ; et
l'élément de remorquage mobile (11) est relié à une pompe hydraulique (42) configurée pour générer une pression hydraulique pour le circuit de relâchement (17) lorsque l'élément de remorquage (11) est déplacé de la position normale de repos à la position de remorquage activée.

8. Véhicule minier selon la revendication 6 ou 7, **caractérisé en ce que**
l'élément de commande du circuit de relâchement (17) est une soupape de séparation commandée par pression (20) configurée pour séparer le circuit de freinage principal (16) et le circuit de relâchement (17) l'un de l'autre lorsque la pression du circuit de relâchement (17) est inférieure à une limite de pression prédéfinie.

9. Procédé de commande d'ensembles de freinage activés par ressort et relâchables hydrauliquement (14) d'un véhicule minier (2),
le procédé comprenant :
la génération d'une pression hydraulique vers un circuit de freinage principal (16) au moyen d'une première source hydraulique (Ps1) ;
la commande de l'alimentation en pression hydraulique des actionneurs de relâchement (RA) des ensembles de freinage (14) au moyen d'un dispositif de commande de frein (BC) relié au circuit de freinage principal (16) ;
la direction du fluide de pression hydraulique dans le circuit de freinage principal (16) vers les actionneurs de relâchement (RA) pour relâcher les freins activés par ressort (15) ;
la direction du fluide de pression hydraulique dans le circuit de freinage principal (16) loin des actionneurs de relâchement (RA) pour dépressuriser les actionneurs de relâchement (RA) et serrer les freins (15) au moyen des ressorts (S) des ensembles de freinage (14) ; et
la direction sélective du fluide de pression hydraulique d'une seconde source de pression (Ps2) via un circuit de relâchement (17) séparé vers les actionneurs de relâchement (RA), et l'activation par là-même du circuit de relâchement (17), pour relâcher les freins (15) indépendamment lorsque le circuit de freinage principal (16) est dépressurisé ;
**caractérisé par**
la dépressurisation du circuit de relâchement (17) sélectivement au moyen d'un dispositif de surpassement (21) relié au circuit de relâchement (17) et l'activation des freins (15) en dépit du circuit de relâchement activé (17).

10. Procédé selon la revendication 9, **caractérisé par**
la déconnexion du circuit de relâchement (17) de la seconde source de pression (Ps2) et l'évacuation du circuit de relâchement (17) sélectivement au moyen d'une soupape de surpassement (36) reliée au circuit de relâchement (17).

11. Procédé selon la revendication 9 ou 10, **caractérisé par**
l'activation du fonctionnement du dispositif de surpassement (21) au moyen d'une pédale de frein (34) agencée pour commander le dispositif de commande de frein (BC) du circuit de freinage principal (16).

12. Procédé selon l'une quelconque des revendications 9-11 précédentes, **caractérisé par**
la fourniture de la commande pour le système de frein (13) au moyen du dispositif de surpassement (21) seulement après que le circuit de relâchement (17) a été pressurisé.

13. Procédé selon l'une quelconque des revendications 9-12 précédentes, **caractérisé par**
la pressurisation du circuit de relâchement (17) automatiquement en réponse au remorquage du véhicule minier (2).
